# EUROPÄISCHE PATENTSCHRIFT

(11) **EP 2 390 301 B1**
(45) Veröffentlichungstag und Bekanntmachung des Hinweises auf die Patenterteilung: **20.04.2016**
(21) Anmeldenummer: 11167830.6
(22) Anmeldetag: 27.05.2011
(51) Int. Cl.: C10B 47/44, C10B 51/00, C10B 53/02, C10B 57/12, C10B 57/00

(54) **REAKTORANLAGE UND VERFAHREN ZUR ERZEUGUNG EINES KOHLENSTOFFANGEREICHERTEN FESTSTOFFPRODUKTS MITTELS ERHÖHUNG DES KOHLENSTOFFGEHALTS**
REACTOR ASSEMBLY AND METHOD FOR PRODUCING A CARBON-ENRICHED SOLID PRODUCT BY MEANS OF INCREASING THE CARBON CONTENT
INSTALLATION DE RÉACTEUR ET PROCÉDÉ DE PRODUCTION D'UN PRODUIT DE MATIÈRE SOLIDE ENRICHI EN CARBONE À L'AIDE D'UNE AUGMENTATION DE LA TENEUR EN CARBONE

(30) Priorität: 31.05.2010 DE 102010017175
(43) Veröffentlichungstag der Anmeldung: 30.11.2011
(73) Patentinhaber: EnBW Energie Baden-Württemberg AG, 76131 Karlsruhe (DE)
(72) Erfinder: Walz, Leonhard, 76437 Rastatt (DE); Bockhorn, Henning, 76327 Pfinztal (DE); Reichert, Dirk, 76133 Karlsruhe (DE); Steinbrück, Johannes, 76149 Karlsruhe (DE); Rossbach, Martin, 76137 Karlsruhe (DE); Eyler, David, 67470 Seltz (FR)
(74) Vertreter: Kaufmann, Ursula Josefine

(56) Entgegenhaltungen:
- EP-A1- 0 684 116
- EP-A1- 1 170 354
- JP-A- 2002 194 362

## Beschreibung

Die Erfindung betrifft eine Reaktoranlage und ein Verfahren zur Erzeugung eines kohlenstoffangereicherten Feststoffprodukts mittels Erhöhung des Kohlenstoffgehalts und Verringerung des Sauerstoffgehalts.

Bei den bekannten Verfahren wird zur Erhöhung des Kohlenstoffgehalts einer Kohlenstoffquelle, z.B. Biomasse, der Sauerstoffgehalt in dem kohlenstoffhaltigen Material verringert. Bei diesen Verfahren werden im wesentlichen drei den unterschiedlichen Aggregatszuständen (fest, flüssig und gasförmig) entsprechende Produktströme erzeugt, wobei sich der Kohlenstoff im wesentlichen auf alle Fraktionen verteilt, beispielsweise als gasförmiges CO₂, flüssiges Bio-Öl oder einen kohleartigen Feststoff.

Bekannte Verfahren, die hierfür eingesetzt werden, sind beispielsweise die Pyrolyse, einer rein thermischen Behandlung unter geringem Sauerstoffpartialdruck, oder eine hydrothermale Behandlung, eine Behandlung mit heißem Druckwasser. Beide Techniken erlauben die Bevorzugung einer gewünschten Produktfraktion (fest, flüssig, gasförmig).

Um hauptsächlich einen kohleartigen Feststoff, insbesondere Holzkohle, zu erhalten, verweilt bei der Pyrolysetechnik der Ausgangsstoff mehrere Stunden bei hoher Temperatur, meist deutlich über 450°C, in einem Reaktor. Die dafür benötigte Energie wird z.B. autotherm durch gezielte Sauerstoffdosierung aufgebracht. Es ist jedoch auch möglich, das sich aufgrund der Pyrolyse eines kohlenstoffhaltigen Materials bildende Produktgas zu verbrennen und als Wärmequelle zu verwenden. Nachteilig ist jedoch, dass bei diesem Verfahren nur mittlere Ausbeuten von ca. 60% an kohleartigem Feststoff mit hohem Kohlenstoffanteil erhalten werden.

Um die Ausbeute bei Pyrolyseverfahren zu erhöhen, wurde das Schnell-Pyrolyseverfahren entwickelt, bei dem das kohlenstoffhaltige Material schlagartig unter Sauerstoffabschluss auf über 500°C erhitzt wird. Dabei zersetzt sich das Material in überwiegend flüchtige Bestandteile. Diese werden durch ein reaktionsarmes Trägergas aus dem Reaktor in eine Kondensationsvorrichtung gefördert und zu "Bio-Öl" verflüssigt. Wie in der CA 02639022 A1 vorgeschlagen, kann dabei überhitzter Wasserdampf als Trägergas unter hohem Druck verwendet werden, wobei vorteilhafterweise die Ausbeute an Bio-Öl weiter erhöht werden kann. Die Umsetzung des kohlenstoffhaltigen Materials erfolgt diskontinuierlich, in einem sogenannten Batchprozess.

Nachteilig ist jedoch, dass dieses Verfahren nicht zur Erzeugung eines kohleartigen Feststoffs einsetzbar ist.

Eine andere Möglichkeit zur Darstellung eines kohleartigen Produkts stellt die hydrothermale Karbonisierung dar, bei der der Kohlenstoffgehalt des Edukts in einem Druckreaktor unter einem Druck deutlich über 10 bar und bei mittleren Temperaturen zwischen 150°C und 250°C und einem (Säure-) Katalysator über mehrere Stunden angehoben wird. Bei den Reaktionsbedingungen liegt Wasser in der flüssigen Phase vor. Die Kohlenstoffausbeute bei dieser Technik liegt zwar höher als bei der Pyrolyse, allerdings erfordern die hohen zu realisierenden Drücke, die Heterogenität der Reaktionsmischung, und die demnach nötige Abtrennung des festen Produkts einen hohen technischen Aufwand.

Neben dem hohen technischen bzw. dem hohen thermalen Aufwand bei beiden bekannten Verfahren, ist zudem die lange Verweildauer von mehreren Stunden nachteilig.

Die DE 20 2008 012 419 U1 offenbart eine typische Anlage zur hydrothermalen Karbonisierung. Die Karbonisierung der Biomasse erfolgt in flüssigem heißem Druckwasser bei einem Druck, der mindestens dem Sättigungsdampfdruck des Wassers entspricht. Typische Werte sind 10-30 bar bei Temperaturen von 160°C-210°C, wobei die Prozesszeiten bei 5 bis 14 Stunden liegen. Die Reaktionsmischung ist homogen, d.h. die Biomasse ist eine pastöse, mit Wasser versetzte Masse. Aus dem Reaktor entnommene Zwischenprodukte können einer weiteren Verarbeitung zugeführt werden. Dabei kann noch enthaltenes Wasser mit einer Filtereinrichtung abgetrennt werden und dem Reaktor als Wasserzugabe wieder zugeführt werden. Die notwendige Mindest-Verweilzeit der Biomasse im Reaktor wird durch eine entsprechende Reaktorlänge gewährleistet. Wegen der hohen Drücke und Temperaturen ist das Einschleusen der Biomasse und Ausschleusen von End- und Zwischenprodukten von der Bedienung und der Prozesssteuerung aufwändig. Aufgrund des hohen Drucks im Reaktor ist eine kontinuierliche Reaktionsführung nicht möglich, sondern erfolgt quasikontinuierlich. Der Reaktor weist dabei aufeinanderfolgende Reaktorsegmente auf, die jeweils unterschiedliche Temperaturen haben, wobei die Biomasse von einer Fördereinrichtung von einem in das nächste Reaktorsegment transportiert wird, in dem es für eine gegebene Zeitspanne verweilt.

In der EP 0 684 116A1 ist eine Reaktoranlage zur Gewinnung von flüssigem Kraftstoff offenbart, bei der überhitzter Wasserdampf als Wärmeträger eingesetzt wird. Dabei wird gemäß einem Ausführungsbeispiel Altgummi in einem diskontinuierlichen Verfahren überhitztem Wasserdampf mit einer Temperatur von 400°C und einem Druck von 1 bar ausgesetzt und dabei hauptsächlich zu flüssigem Brennstoff umgesetzt. Feststoffreste werden fein gemahlen und mit der Flüssigkeit vermischt.

Die EP 1 170 354 A1 beschreibt ein ähnliches Verfahren, bei dem organischer Abfall mit überhitztem Wasserdampf bei z.B. 350°C und bei niedrigem Druck von 1 bis 2 atm behandelt wird. Gasförmiges Reaktionsfluid wird beim Kaltstart der Anlage über einen Wärmetauscher geleitet, mit überhitztem Wasserdampf gemischt und in den Reaktor zurückgeführt. Im Betrieb, wenn der Abfall umgesetzt wird, wird das "verunreinigte" heiße Gas in eine Einrichtung zur Heißdampferzeugung geleitet, um den Wasserdampf zu erhitzen und um zu vermeiden, dass die "Verunreinigungen" die Leitung verstopfen.

Auch in der JP 2002 194362 A) ist ein entsprechendes Verfahren beschrieben, bei dem Temperaturen zwischen 200-400°C und niedrigen Drücken zur Anwendung kommen.

Aufgabe der vorliegenden Erfindung ist es, eine Reaktoranlage und ein Verfahren bereitzustellen, die die Nachteile des Stands der Technik bei der Erzeugung eines kohlenstoffangereicherten Feststoffprodukts verbessern, der gegenüber einem zugeführten kohlenstoffhaltigen Material einen erhöhten Kohlenstoffanteil aufweist.

Die Aufgabe wird erfindungsgemäß durch die Merkmale der unabhängigen Ansprüche gelöst. Günstige Ausgestaltungen und Vorteile der Erfindung ergeben sich aus den weiteren Ansprüchen, den Zeichnungen und der Beschreibung.

Erfindungsgemäß wird eine Reaktoranlage und ein Verfahren zur Erzeugung eines kohlenstoffangereicherten Feststoffprodukts vorgeschlagen, bei der eine Erhöhung des Kohlenstoffgehalts und eine Verminderung des Sauerstoffgehalts eines kohlenstoffhaltigen Ausgangsmaterials in einem Reaktor durchgeführt wird, in dem eine Temperatur zwischen 100°C bis 450°C und ein Druck zwischen 1 bar und 5 bar herrschen, wobei Reaktionsbedingungen so gewählt sind, dass das Reaktionsfluid während der Reaktion gasförmig bleibt.

Vorteilhaft kann die Aufenthaltszeit des kohlenstoffhaltigen Materials im Reaktor mittels der Fördereinrichtung so geregelt werden, dass diese Minuten bis wenige Stunden beträgt. Günstig ist insbesondere ein Temperaturbereich zwischen 250°C und ungefähr 400°C bei einem bevorzugten Druck zwischen 1 und 4 bar, besonders bevorzugt höchstens 2 bar.

Durch den geringeren Druck in der Vorrichtung ist sowohl die Handhabung als auch die Prozesssteuerung der Reaktoranlage stark vereinfacht. Eine spezielle Ausbildung oder Einweisung von Personal wie bei Hochdruckanlagen mit Reaktionsdrücken von 10-20 bar ist nicht notwendig. Aufgrund der atmosphärischen oder wenigstens nahezu atmosphärischen Druckumgebung sind etwaige Schleusen als Ein- und Auslass erheblich einfacher und benötigen eine weit weniger anspruchsvolle Steuerung.

Günstigerweise umfasst die Reaktoranlage eine Temperiereinrichtung, mit der die gewünschten Reaktionstemperaturen erreichbar und insbesondere konstant gehalten werden können. Idealerweise kann die Temperatur durch ein Reaktionsfluid, insbesondere Wasserdampf, eingestellt werden, der "dezentral" und als Vorrat bereitet werden kann, so dass geringere Energiedichten notwendig sein können im Vergleich zu anderen Verfahren.

Unter Dampf oder dampfförmig soll im diesem Zusammenhang kein Nassdampf verstanden werden, sondern Heißdampf, d.h. überhitzter Dampf, der ein reales Gas aus Wassermolekülen darstellt und dessen Temperatur oberhalb der Kondensationstemperatur der flüssigen Phase beim jeweiligen Druck liegt.

Um unter diesen Bedingungen ein kohlenstoffangereichertes Feststoffprodukt herzustellen, wird dem kohlenstoffhaltigen Ausgangsmaterial ein Reaktionsfluid über eine Einlassöffnung zugegeben, wobei das Reaktionsfluid vorteilhafterweise Wasserdampf oder ein Wasserdampfgemisch sein kann. Die Einlassöffnung kann derart ausgestaltet sein, dass sie über einen Einlassbereich des Reaktors verteilte Öffnungen aufweist, so dass eine gezielte Verteilung, beispielsweise eine gleichmäßige Verteilung, des Reaktionsfluids erreicht werden kann. Diese Ausgestaltung ist für vergleichsweise feinkörnige Einsatzstoffe geeignet.

Als kohlenstoffhaltiges Ausgangsprodukt sind alle organischen Verbindungen denkbar. Besonders bevorzugt sind jedoch Ausgangsprodukte, wie beispielsweise Biomasse, sowohl lignozellulosische Materialien, wie z.B. Holz oder Stroh oder Grünschnitte, aber auch anderweitige Kohlenstoffquellen, wie etwa Reststoffe aus Getränke- oder Lebensmittelindustrie, die organische Hausmüllfraktion oder Klärschlämme. Neben Biomasse sind auch fossile Kohlenstoffquellen als Ausgansprodukt denkbar.

Die Erfindung erlaubt auch eine Behandlung von chemisch aktiven Klärschlämmen mit hohem mineralischem Anteil in dem Sinne, dass eine Inertisierung des Klärschlamms einsetzt und eine Geruchsentfernung stattfindet. Der so behandelte Klärschlamm kann dann z.B. unbedenklich und ohne Geruchsbelästigung im Freien ausgebracht werden.

Als Wasserdampfgemisch können, wie weitere Ausführungsbeispiele zeigen, ein Wasserdampf/Trägergasgemisch und/oder ein Wasserdampf/ Reaktionsgasgemisch, insbesondere mit organischen Komponenten, wie beispielsweise Methan, höheren Alkanen, Alkenen, Aromaten, Derivaten, Kohlendioxid, und/oder Kohlenmonoxid, und/oder einem oder mehreren Aerosolen, wie beispielsweise Säureanhydride, und/oder Leichtmetallsalze als Reaktionsgas verwendet werden, bei besonders resistenten Reaktorbauteilen könnten gegebenenfalls sogar Schwefelsäure, Salzsäure und/oder Natriumhydroxid, verwendet werden. Das Reaktionsgas kann beispielsweise auch Verbrennungsabluft oder Verbrennungsabgas, beispielsweise von einer Gasturbine, enthalten und/oder aus dieser bestehen, welche vorteilhafterweise saure Gaskomponenten enthalten kann. Säuren und Basen unterstützen katalytisch die gewünschten chemischen Reaktionen, wie z.B. Dehydratisierung und Spaltung.

Im Gegensatz zur rein thermischen Behandlung des kohlenstoffhaltigen Ausgangsmaterials können bei der Verwendung von Wasserdampf oder eines Wasserdampfgemischs niedrigere Temperaturen in einem Bereich von 100°C bis ungefähr 450°C, vorzugsweise zwischen 150°C und 400°C, besonders bevorzugt zwischen 250°C und 350°C, und/oder kürzere Verweilzeiten im Reaktor von Minuten bis wenige Stunden realisiert werden. Dabei kann ein kohlenstoffangereichertes Feststoffprodukt erhalten werden, das bereits bei sehr kurzer Verweilzeit ähnliche Köhlenstoffmassenanteile zeigt, wie sie bei den aus dem Stand der Technik bekannten Verfahren erhalten werden. Vorzugsweise weist das kohlenstöffangereicherte Feststoffprodukt braunkohleartige Eigenschaften auf. Dies ist hinsichtlich des Energieeinsatzes bei der Umwandlung und des Brennwertgewinns des kohlenstoffangereicherten Feststoffprodukts gegenüber des eingangsseitig zugeführten kohlenstoffhaltigen Materials sehr günstig. Braunkohle besitzt etwa zwei Drittel der Energiedichte von Steinkohle.

Grundsätzlich ist jedoch denkbar, dass bei entsprechend erhöhter Verweildauer im Reaktor auch ein holzkohleartiges Feststoffprodukt gewonnen werden kann.

Grund dafür ist, dass der Wasserdampf einen katalytischen Einfluss ausübt, der bei den niedrigen Temperaturen sowohl die Energiebarriere der Umwandlung senkt als auch andere Reaktionspfade als die des reinen thermischen Abbaus ermöglicht. Ferner kann durch Einfluss des Wasserdampfs eine direkte Hydrolyse der einzelnen Bestandteile der Kohlenstoffquelle erfolgen und somit vorteilhaft hydrolytische und thermische Reaktionen vereint werden. Vorteilhaft sind die Reaktionsbedingungen so gewählt, dass der Wasserdampf nicht oder praktisch nicht kondensiert, sondern während der Reaktion gasförmig bleibt. Dabei kann eine aufwändige Vorbehandlung des zuzuführenden kohlenstoffhaltigen Materials unterbleiben. Die Reaktionsbedingungen können z.B. einfach an den aktuellen Feuchtegehalt oder die Temperatur des frisch zugeführten kohlenstoffhaltigen Materials angepasst werden.

Erfindungsgemäß umfasst der Reaktor weiterhin eine erste Einlassöffnung zum Einbringen des kohlenstoffhaltigen Materials, mindestens eine zweite Einlassöffnung zum Einbringen eines Reaktionsfluids, eine erste Auslassöffnung zum Austragen des kohlenstoffangereicherten Feststoffprodukts, eine zweite Auslassöffnung zum Austragen des Reaktionsfluids; eine Fördereinrichtung für den Transport des Materials von erster Einlassöffnung zu erster Auslassöffnung, und eine Temperiereinrichtung zum Einstellen einer Reaktionstemperatur in dem Reaktor, wobei der Reaktor weiterhin mit einer Steuereinrichtung gekoppelt ist, die dazu ausgelegt ist, die Betriebsparameter derart einzustellen, dass bei einer Temperatur zwischen 100°C bis 450°C und einem Druck zwischen 1 bar und 5 bar das gewünschte kohlenstoffangereicherte Feststoffprodukt erzeugt wird.

Vorteilhaft wird die Verweilzeit der Biomasse in der Reaktoranlage im Wesentlichen durch die Geschwindigkeit einer Fördereinrichtung bestimmt, so dass kontinuierlich kohlenstoffhaltiges Material, z.B. Biomasse, zugeführt und kohlenstoffangereichertes Feststoffprodukt entnommen werden kann.

Bei den Betriebsparametern kann vorteilhaft insbesondere die Temperatur vorgegeben und gesteuert oder geregelt werden, woraus ein leichter Überdruck von bis zu höchstens 5 bar resultieren kann. Der Druck kann zweckmäßigerweise zur Kontrolle aufgezeichnet werden, um bei Erreichen eines gewissen Grenzdrucks reagieren zu können, bevor es zu Anlagen- und sonstigen Schäden kommen kann. Denkbar ist, alternativ oder zusätzlich den Druck direkt zuregeln oder zu steuern.

Das Reaktionsfluid wird zumindest teilweise rezirkuliert. 10 Die Rezirkulation des Reaktionsfluids wird zu einer Erhöhung des Kohlenstoffgehalts des kohlenstoffangereicherten Feststoffprodukts genutzt, da in dem rezirkulierten Reaktionsfluid, vorzugsweise Wasserdampf, organische Bestandteile enthalten sind, die von dem kohlenstoffhaltigen Ausgangsmaterial im Reaktor adsorbiert und/oder absorbiert werden können. Es handelt sich hierbei um organische Komponenten, die aus der Biomasse zuvor herausgelöst wurden. Dadurch kann der Kohlenstoffanteil des kohlenstoffangereicherten Feststoffprodukts weiter erhöht werden.

Die Erfindung erlaubt durch die Rezirkulationseinheit auch eine Betriebsweise, in der kein zusätzliches Reaktionsfluid zugegeben wird und in dem das (gasförmige) Reaktionsfluid, überwiegend Wasserdampf, dem eingesetzten kohlenstoffhaltigen Ausgangsstoff entstammt, wodurch sich die Kohlenstoffkonzentration in der Dampfphase (bzw. Gasphase) erhöht und dadurch die Absorptionswahrscheinlichkeit der organischen Komponenten auf dem kohlenstoffhaltigen Ausgangsprodukt erhöht

Vorzugsweise kann der Umsetzungsprozess heterogen geführt werden in dem Sinne, dass ein festes kohlenstoffhaltiges Material in einer Dampfphase umgesetzt wird und nicht, wie im Stand der Technik, ein quasi-homogener Prozess mit einer Biomassepaste in flüssigem Druckwasser umgesetzt wird.

Im Gegensatz zum Stand der Technik ist der Betrieb der Reaktoranlage erheblich vereinfacht. Bei hohem Druck und Reaktion in der Flüssigphase, wie bei der bekannten typischen hydrothermalen Karbonisierung, sind die Regel- und/oder Steueranforderungen hoch, da der Druck an den Schleusen für die quasi-kontinuierliche Reaktionsführung zu regeln ist. Vorteilhaft wird in der erfindungsgemäßen Reaktoranlage dagegen im Wesentlichen nur die Temperatur und gegebenenfalls je nach Kohlenstoffkonzentration in dem rezirkulierten gasförmigen Reaktionsfluid das Rücklaufverhältnis, d.h. der Kreislaufstrom geregelt.

Vorteilhafterweise kann die Steuereinrichtung die Betriebsparameter derart steuern, dass im Reaktor eine Temperatur zwischen etwa 250°C bis ungefähr 400°C, einstellbar ist bei einem bevorzugten Druck zwischen 1 und 4 bar und einer Verweildauer im Reaktor zwischen 2 bis 120 min, wobei die Reaktionstemperatur insbesondere so einstellbar ist, dass die Temperatur unterhalb einer Grenztemperatur einstellbar ist, oberhalb derer eine erhöhte Bildung von Kohlenstoffoxiden, z.B. organische Säuren, CO₂ oder CO erfolgt. Insbesondere setzt oberhalb der Grenztemperatur ein starker Anstieg der Bildung von CO₂ ein. Daher kann durch eine geeignet niedrige Reaktionstemperatur günstigerweise eine solche erhöhte Bildung von Kohlenstoffoxiden vermieden werden, so dass dem kohlenstoffangereicherten Feststoffprodukt dieser Kohlenstoffanteil erhalten bleibt. Ein weiterer günstiger Reaktionsbereich liegt bei einer Reaktionstemperatur im Bereich zwischen 250°C und 350°C und einem Druck zwischen 1 bis 2 bar sowie einer Verweildauer von etwa 15 bis etwa 120 min.

Gemäß einer günstigen und ökonomischen Ausgestaltung kann die Steuereinrichtung dazu ausgelegt sein, die Fördereinrichtung derart anzusteuern, dass das kohlenstoffhaltige Material kontinuierlich zuzuführen und das kohlenstoffangereicherte Feststoffprodukt kontinuierlich abzuführen ist, so dass das kohlenstoffhaltige Material während der Umsetzung zum kohlenstoffangereicherten Feststoffprodukt kontinuierlich durch den Reaktor bewegbar ist.

Gemäß einer zweckmäßigen Ausgestaltung kann die Steuereinrichtung dazu ausgelegt sein, die Fördereinrichtung derart anzusteuern, dass das umzusetzende kohlenstoffhaltige Material im Reaktor maximal wenige Stunden verweilt, insbesondere ein bis zwei Stunden im Reaktor verweilt, wobei die Fördereinrichtung z.B. eine Förderschnecke, ein Transportband, eine Gravitationsfördereinrichtung oder dergleichen sein kann. Eine kontinuierliche Zufuhr des kohlenstoffhaltigen Materials und eine kontinuierliche Entnahme des kohlenstoffangereicherten Feststoffprodukts lassen sich auf einfache Weise realisieren. Die Verweilzeit wird dabei im Wesentlichen durch die Geschwindigkeit der Fördereinrichtung vorgegeben. Zwischen Einlassöffnung und Auslassöffnung kann das umzusetzende kohlenstoffhaltige Material kontinuierlich in Bewegung sein. Dabei kann der Reaktor zweckmäßigerweise als Rohrleitungsreaktor ausgebildet sein, bei dem das kohlenstoffhaltige Ausgangsmaterial mit einem relativ niedrigen Kohlenstoffmassenanteil innerhalb der Rohrleitung mit Wasserdampf bei Reaktionstemperaturen und Reaktionsdruck beaufschlagt wird. Dadurch finden die Hydrolysereaktion, und ferner die zur Absenkung des Sauerstoffanteils führenden Dehydratisierungs- und Fragmentierungsreaktionen statt. Günstigerweise wird die Temperatur und der Druck dabei im Wesentlichen konstant gehalten. Vorteilhafterweise wird das kohlenstoffhaltige Ausgangmaterial mittels einer vorzugsweise steuerbaren Vorrichtung wie etwa einer Förderschnecke oder eines Transportbands oder auch durch Gravitation fortbewegt. Dadurch ist eine kontinuierliche Zuführung von kohlenstoffhaltigen Edukten und Abführung von kohlenstoffangereicherten Feststoffprodukten möglich.

Das Reaktionsfluid wird zumindest teilweise rezirkuliert. Die Rezirkulation des Reaktionsfluids führt zu einer Erhöhung des Kohlenstoffgehalts des kohlenstoffangereicherten Feststoffprodukts, da in dem rezirkulierten gasförmigen Reaktionsfluid, vorzugsweise Wasserdampf, organische Bestandteile enthalten sind, die von dem kohlenstoffhaltigen Ausgangsmaterial im Reaktor adsorbiert werden können. Dadurch kann der Kohlenstoffanteil des kohlenstoffangereicherten Feststoffprodukts weiter erhöht werden.

Gemäß einer weiteren Ausgestaltung kann die Temperiereinrichtung als erster Wärmetauscher ausgebildet sein, der die Reaktionswärme des Reaktors an ein Wärmeträgermedium abgibt und/oder von einem Wärmeträgermedium aufnimmt, wobei vorteilhafterweise das Wärmeträgermedium das Reaktionsfluid sein kann. So kann das Reaktionsfluid aus dem Reaktor, beispielsweise am Ende des Reaktors, durch eine Rohrleitung von einer vorzugsweise steuerbaren Pumpe angesaugt und vorteilhafterweise entweder zuvor bzw. anschließend mittels eines regelbaren Wärmetauschers nochmals auf Reaktionstemperatur gebracht werden. Die Pumpe kann stromab einer Analyseeinheit angeordnet sein, mit der das entnommene Reaktionsfluid analysiert werden kann.

In diesem Wärmetauscher kann ferner die durch die Dehydratisierung des kohlenstoffhaltigen Ausgangsmaterials freigesetzte Wärme abgeführt bzw. Wärme der Reaktoranlage zugeführt werden.

Gemäß einem weiteren günstigen Ausführungsbeispiel kann eine vorzugsweise steuerbare Fluidauskopplungsvorrichtung, beispielsweise in Form eines Ventils, vorgesehen sein, an dem das Reaktionsfluid, z.B. organisch beladenes Reaktionsfluid, ausgekoppelt werden kann.

Vorteilhafterweise kann stromab der Fluidauskoppeleinrichtung eine Trenneinrichtung vorgesehen sein, mit der eine Trennung der kondensierbaren Reaktionsfluidbestandteile und der gasförmigen Reaktionsfluidbestandteile durchführbar ist, die nachfolgend optional in ihre kondensierbaren und ihre gasförmigen Bestandteile getrennt und aufgefangen werden können.

Desweiteren kann vorteilhafterweise eine steuerbare Fluideinkoppelvorrichtung, insbesondere in Form eines steuerbaren Ventils, vorgesehen sein, mittels der organisch unbeladener Wasserdampf und/oder Trägergas und/oder ein Reaktionsstoff der Reaktoranlage zugeführt werden kann.

Vorteilhafterweise kann gemäß einer weiteren günstigen Ausgestaltung die organische Beladung des Wasserdampfs durch eine oder mehrere geeignete Analyseeinheiten festgestellt werden, wobei die Analyseeinheiten vor dem Reaktionsfluideinlass (stromauf) und/oder nach dem Reaktionsfluidauslass, angeordnet sein können. Mittels der Analyseeinheiten können zweckmäßigerweise der Reaktionsfluiddruck und/oder Reaktionsfluidtemperatur bestimmt werden und/oder eine qualitative und/oder quantitative Bestimmung der Bestandteile des aus der zweiten Auslassöffnung entfernten Reaktionsfluids, insbesondere mittels Flammenionisationsdetektion oder mittels Spektroskopie, wie beispielsweise Infrarotspektroskopie, vorgenommen werden.

Vorteilhafterweise können die bestimmten Werte der Steuereinheit zugeführt werden, die wiederum die Betriebsparameter, wie z.B. Verweilzeit, Druck und Temperatur im Reaktor bzw. Druck und Temperatur des Wasserdampfes und/oder eine Frischwasserdampfaustauschfrequenz, entsprechend steuern kann.

Günstigerweise kann die Reaktoranlage eine Fluidauskoppelvorrichtung aufweisen insbesondere in Form eines Ventils, mit der überschüssiges Reaktionsfluid aus der Reaktoranlage auskoppelbar ist. Optional kann stromab der Fluidauskoppelvorrichtung eine Trennvorrichtung vorgesehen sein, mit der eine Trennung der kondensierbaren Reaktionsfluidbestandteile und der gasförmigen Reaktionsfluidbestandteile durchführbar ist. Weiterhin kann die Trennvorrichtung einen Wärmetauscher aufweisen, der das ausgekoppelte Reaktionsfluid auf etwa Raumtemperatur abkühlt, wobei vorzugsweise der Wärmetauscher mit einem ersten Auffangbehälter für kondensierte Bestandteile und einem zweiten Auffangbehälter für gasförmige Bestandteile verbunden sein kann. Als Wärmeträgermedium kann beispielsweise (aber nicht ausschließlich) Frischwasser zur Dampfbereitung eingesetzt werden. Es kann eine Pumpe zur Förderung und/oder Verdichtung der gasförmigen Bestandteile des ausgekoppelten Reaktionsfluids stromab des dritten Wärmetauschers vorhanden sein.

Weiterhin kann eine Fluideinkoppelvorrichtung, insbesondere in Form eines Ventils, vorgesehen sein, mit der unbelasteter Wasserdampf und/oder Trägergas und/oder Reaktionsstoff der Rezirkulationseinrichtung zugebbar ist. Dabei kann der Reaktionsstoff als Stoff definiert werden, der eine gewünschte chemische Reaktion positiv unterstützt.

Durch die vorteilhaften Ausgestaltungen der Erfindung können somit die Vorteile der rein thermischen Umsetzung zu einem kohlenstoffangereicherten Feststoffprodukt, insbesondere einem braunkohleartigen Feststoffprodukt, wie z.B. die einfache Produktabtrennung, mit der vorteilhafteren chemischen Reaktionssequenz der hydrothermalen Karbonisierung, ohne die dort notwendigen hohen Drücke kombiniert werden. Insbesondere kann im Wesentlichen ein Feststoffprodukt, das einen gegenüber einem zugeführten kohlenstoffhaltigen Eingangsmaterial erhöhten Kohlenstoffanteil aufweist, mit ökonomischem Energieeinsatz gewonnen werden. Unerwünschte flüssige oder gasförmige Produktströme können vermindert werden.

Die dem kohlenstoffhaltigen Material entzogenen, wertvollen, gasförmigen oder flüssigen Bestandteile können gesammelt und anderweitig verwendet werden.

Die Erfindung ist nachfolgend beispielhaft, ohne Beschränkung der Allgemeinheit, anhand von in den Zeichnungen dargestellten Ausführungsbeispielen näher erläutert.

Es zeigen in schematischer Darstellung:
- Fig. 1: eine beispielhafte Ausgestaltung eines erfindungsgemäßen Reaktors als Teildarstellung eines bevorzugten Ausführungsbeispiels der erfindungsgemäßen Reaktoranlage;
- Fig. 2: eine Rezirkulationseinrichtung als Teildarstellung eines günstigen Ausführungsbeispiels der erfindungsgemäßen Reaktoranlage;
- Fig. 3: eine Trenneinrichtung als Teildarstellung eines günstigen Ausführungsbeispiels der erfindungsgemäßen Reaktoranlage;
- Fig. 4: eine graphische Darstellung des Kohlenstoffgehalts in Abhängigkeit der Verweilzeit; und
- Fig. 5: eine graphische Darstellung des Kohlenstoffgehalts in Abhängigkeit der Temperatur.

In den folgenden Figuren sind funktionell gleich wirkende Elemente jeweils mit gleichen Bezugszeichen beziffert.

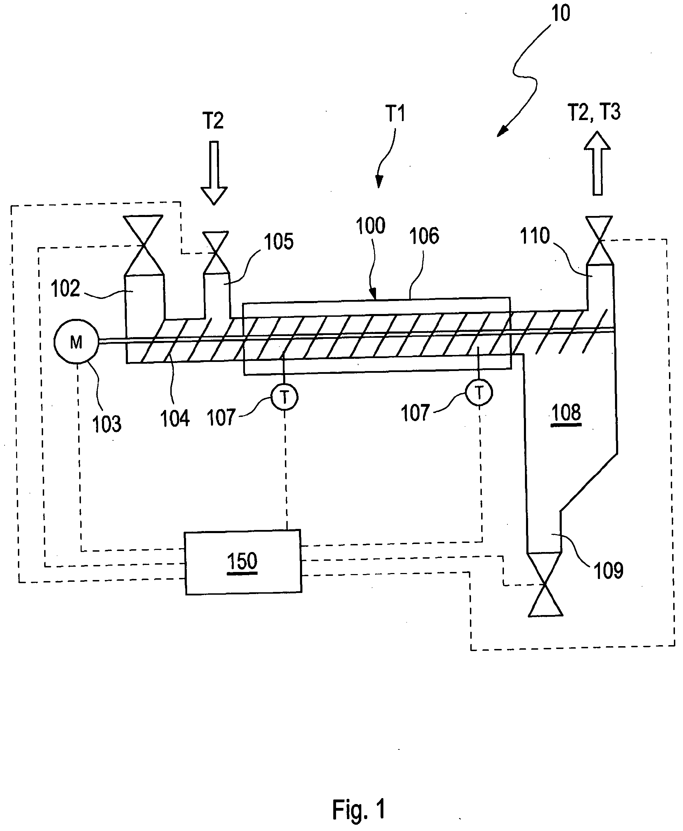

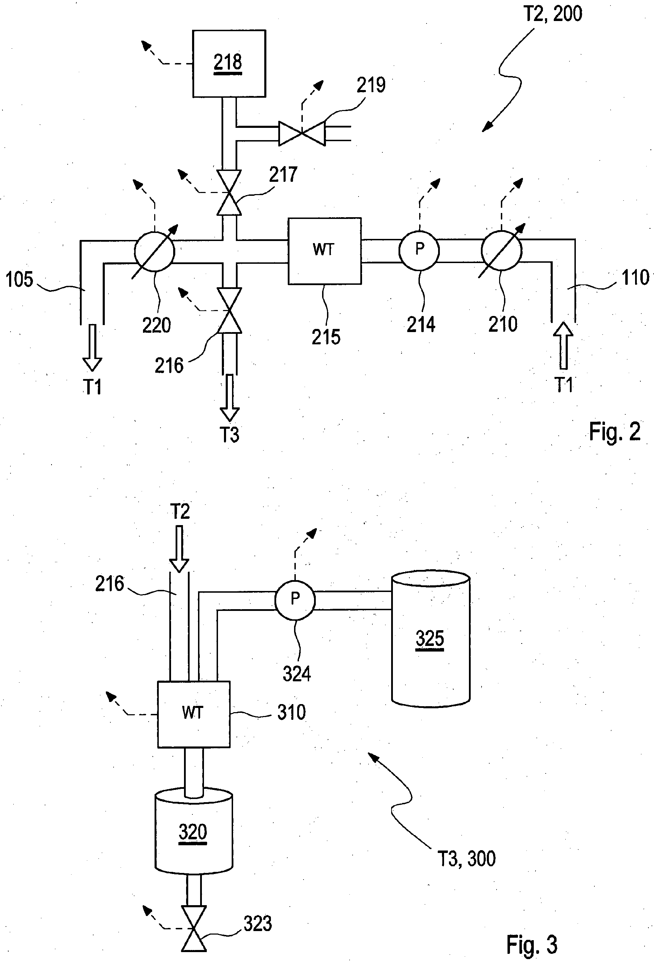

Die Figuren 1 bis 3 zeigen jeweils Teilbereiche T1, T2, T3 eines günstigen Ausführungsbeispiels der erfindungsgemäßen Reaktoranlage 10, wobei Fig. 1 den Teilbereich T1 des Reaktors 100, Fig. 2 den Teilbereich T2 einer Rezirkulationseinrichtung 200 und Fig. 3, den Teilbereich T3 einer Trenneinrichtung 300 darstellt. Mit Blockpfeilen sind die jeweiligen Reaktionsfluidströme in die einzelnen Teilbereiche T1, T2, T3 gekennzeichnet.

Fig. 1 zeigt schematisch eine Darstellung eines als Rohrreaktor 100 ausgebildeten Reaktionsraums zur erfindungsgemäßen Behandlung eines kohlenstoffhaltigen Materials (auch als Edukt bezeichnet) zur Kohlenstoffanreicherung. Das kohlenstoffhaltige Material wird durch mindestens eine erste steuerbare Einlassöffnung 102 in den Reaktor 100 eingebracht. Das Material kann z.B. Biomasse sein. Dabei kann eine besondere Vorbehandlung des Materials vor Einbringen in den Reaktor 100 entfallen, um etwa einen definierten Feuchtegehalt oder dergleichen einzustellen. Die Reaktionsparameter des Reaktors 100 können vorteilhaft auf den aktuellen Zustand des Materials eingestellt werden.

Dabei kann, wenn der Reaktor 100 im automatischen Betrieb gefahren werden soll, ein Vorratsbehälter (nicht dargestellt) vorgesehen sein, der kohlenstoffhaltiges Material in einer ausreichenden Menge vorlegt. Die Materialdosierung in den Reaktor 100 kann dann mittels einer Zuführungssteuerung erfolgen, etwa mit einem mittels eines Stellmotors zu öffnenden Schieberventils, wobei die Steuerung des Motors, wie auch die der sonstigen Anlagenkomponenten, durch mindestens eine elektronische Steuereinrichtung 150, erfolgen kann, mit der eine oder mehrere der Reaktoranlagenkomponenten gesteuert oder geregelt werden können. Die Verbindungen der verschiedenen Reaktoranlagenkomponenten sind mit unterbrochenen Linien zur Steuereinrichtung dargestellt oder angedeutet. Dabei kann die Zuführung des kohlenstoffhaltigen Materials bevorzugt kontinuierlich erfolgen.

Mittels eines steuerbaren Motors 103 wird eine Fördereinrichtung 104, wie etwa eine Förderschnecke oder auch ein Transportband, angetrieben, die den Vorschub des Edukts und damit die Verweilzeit des Materials im Reaktor 100 regelt. Dieser Vorschub kann auch durch Gravitation erreicht und/oder unterstützt oder verzögert werden.

Durch eine zweite, steuerbare Einlassöffnung 105 wird ein Reaktionsfluid, das vorzugsweise aus Wasserdampf oder einem Wasserdampfgemisch besteht, in den Reaktor 100 eingebracht. Dabei kann das Wasserdampfgemisch aus Wasserdampf und/oder einem Trägergas und/oder einem Reaktionsstoff, wie etwa einem Aerosol eines Säureanhydrids und/oder Leichtmetallsalzes, zusammengesetzt sein. Um eine Kondensation des Wasserdampfes im Reaktor 100 zu vermeiden, ist der Wasserdampfpartialdruck des Reaktionsfluids kleiner als der Sättigungsdruck eingestellt. Vorteilhafterweise beschränkt sich die Zuführung des Reaktionsfluids nicht auf einen einzelnen Ort, sondern das Reaktionsfluid wird an mehreren Stellen durch entsprechend verteilte Öffnungen im Bereich der eingangsseitigen Reaktorfront oder auch im Bereich des Reaktors 100 eingebracht.

Der Reaktor 100 weist weiterhin einen steuerbaren Wärmetauscher 106 auf, der vorteilhafterweise als Ummantelung des Reaktors 100 ausgebildet sein kann und den Reaktor 100 in mehreren, einzeln steuerbaren Abschnitten z.B. beheizt. Zudem kann der Wärmetauscher 106 dazu ausgebildet sein, in den Fällen, in denen die sich entwickelnde Reaktionswärme eine vorgegebene Maximaltemperatur überschreitet, eine Kühlung bereitzustellen. Eine sehr hohe Reaktionswärmeentwicklung ist beispielsweise bei der Verwendung von sehr trockenem Edukt möglich.

Um die Temperatur in dem Reaktor 100 zu überwachen, kann ein Temperatursensor 107 oder mehrere Temperatursensoren an dem Reaktor 100 vorgesehen sein, die die Temperatur im Reaktorinnern, vorzugsweise über die Länge verteilt, bestimmen. Damit kann auch sichergestellt werden, dass Wasserdampfgehalt und Temperatur konstant gehalten werden. Es wird beispielsweise eine Temperatur zwischen etwa 100°C bis ungefähr 450°C eingestellt und zweckmäßigerweise möglichst konstant gehalten, woraus sich ein Druck zwischen etwa 1 bar und ungefähr 5 bar ergibt. In manchen Fällen kann eine dynamische Regelung vorteilhaft sein, etwa bei heterogener Eduktzusammensetzung, insbesondere bei unterschiedlichen Gehalten an Lignin und/oder Zellulose, wenn unterschiedliche Komponenten gemeinsam umgesetzt werden sollen.

Das kohlenstoffhaltige Material wird durch die Fördereinrichtung 104 vorzugsweise kontinuierlich durch den Reaktor 100 transportiert und erreicht nach gewünschter Verweilzeit als festes Reaktionsprodukt einen Produktauffangbehälter 108. Dieser weist ein den Reaktordimensionen angepasstes Volumen auf, wobei zunächst eine gewisse Menge an kohlenstoffangereichertem Feststoffprodukt in dem Produktauffangbehälter 108 gesammelt wird, der dann durch Öffnen einer ersten steuerbaren Auslassöffnung 109 z.B. in Form eines Schieberventils, in zeitlichen Intervallen entleert wird. Dabei wird das Feststoffprodukt - bei kontinuierlicher Eduktzufuhr - kontinuierlich aus dem Reaktor 100 in den Produktauffangbehälter 108 überführt. Das Abschließen des Reaktorvolumens an der Stelle der Auslassöffnung 109 ist zur Beibehaltung eines eventuell leichten Systemüberdrucks gegenüber dem Atmosphärendruck sinnvoll.

Das Reaktionsfluid, das hauptsächlich aus mit organischen Verbindungen beladenem Wasserdampf besteht, kann über eine an der oberen Reaktorseite angebrachte steuerbare Auslassöffnung 110 entweichen. Hierzu kann auch eine leicht positive Neigung des Reaktors 100 vorteilhaft sein, um den Dampf bzw. etwaige gasförmige Beimengungen leichter zu entnehmen.

Gemäß einer besonders vorteilhaften Ausgestaltung der erfindungsgemäßen Reaktoranlage 10 weist diese eine Rezirkulationseinrichtung 200 auf, die in Fig. 2 dargestellt ist. Diese Rezirkulationseinrichtung 200 ermöglicht eine Rezirkulation des Wasserdampfes mitsamt der organischen Beladung, die bei der Umsetzung des kohlenstoffhaltigen Materials im Reaktor 100 generiert wird, die z.B. CH₄ und höhere Alkane, Alkene, Aromaten und/oder substituierte Derivate, aber auch die Reaktionsprodukte CO₂ und CO beinhalten kann. Die beiden letztgenannten Stoffe werden für den Geltungsbereich dieser Erfindung unter dem Begriff der organischen Komponenten mit eingebunden. Bei den gewählten Reaktionsbedingungen kann CO₂ in gewissen Mengen gebildet werden, jedoch setzt erst bei höheren Temperaturen als den verwendeten Reaktionstemperaturen eine signifikante und stark zunehmende CO₂-Entwickung ein. Ein nennenswerter Flüssiganteil im Sinne von Bio-Öl entsteht bei geeigneter Wahl der Betriebsparameter praktisch nicht.

Durch Rezirkulation des Reaktionsfluids und damit der in dem Wasserdampf gelösten organischen Bestandteile können die organischen Bestandteile von dem kohlenstoffhaltigen Material im Reaktor 100 adsorbiert werden, wodurch eine höhere Kohlenstoffausbeute beim kohlenstoffangereicherten Feststoffprodukt erhalten werden kann. Zur technischen Realisierung wird beispielsweise das in Fig. 1 durch die steuerbare Auslassöffnung 110 entweichende gasförmige Reaktionsfluid mit organischer Beladung durch eine wärmeisolierte Rohrleitung in eine Analyseeinheit 210 geleitet, die die qualitative und quantitative Bestimmung der organischen Komponenten im Reaktionsfluid und eine Messung des Drucks und der Temperatur des Reaktionsfluids durchführt. Zu den gängigen Analysemethoden der Inhaltsstoffe des Reaktionsfluids zählen beispielsweise spektroskopische Methoden wie die Infrarotspektroskopie, aber auch andere qualitative und quantitative Meßverfahren zur Analyse kohlenstoffhaltiger Substanzen, wie etwa die Flammenionisationsdetektion.

Im weiteren Verlauf wird das Reaktionsfluid von einer Pumpe 214 angesaugt und eventuell verdichtet, bevor es durch einen zweiten Wärmetauscher 215 geleitet wird, der zur Einstellung der gewünschten Reaktionstemperatur verwendet wird. In diesem wird durch externe Wärmezufuhr der Wärmeverlust ausgeglichen oder aber überschüssige Wärme, die durch die exothermen Reaktionen an das Fluid übertragen wird, über Wärmeabfuhr ausgekoppelt. Je nach Einsatzbereich kann die Pumpe 214 zweckmäßigerweise stromauf oder stromab des zweiten Wärmetauschers 215 angeordnet sein.

Die Steuerung der Pumpe 214 und des Wärmetauschers 215 wird dabei vorteilhafterweise durch die Steuereinrichtung 150 (Fig. 1) übernommen, an die auch die Analyseeinheit 210, die detektierten Werte z.B. für Druck und Temperatur des Reaktionsfluids übermittelt.

Bei der oben beschriebenen hydrothermolytischen Behandlung des kohlenstoffhaltigen Ausgangsmaterials kann zudem Wasser freigesetzt werden, das folglich im rezirkulierten Reaktionsfluid akkumuliert. Um den Wasserdampfanteil und die anderen Reaktionsbedingungen konstant zu halten, kann es deshalb vorteilhaft sein, eine Fluidauskoppelvorrichtung 216, beispielsweise in Form eines steuerbaren Ventils, vorzusehen, wodurch die Möglichkeit gegeben ist, überschüssiges Fluid aus dem System kontinuierlich oder auch diskontinuierlich auszukoppeln.

Um im Fall einer Reaktionsfluidauskopplung wieder Reaktionsfluid bereitzustellen, oder um eine bevorzugte Zusammensetzung des Reaktionsfluids bereitzustellen, kann desweiteren eine insbesondere steuerbare Reaktionsfluideinkoppelvorrichtung 217 über ein insbesondere steuerbares Ventil vorgesehen sein, mit der unbeladener Wasserdampf und/oder unbeladenes Trägergas oder unbeladener Reaktionsstoff dem Kreislauf zugeführt werden kann.

Dabei kann der Wasserdampf extern durch einen steuerbaren Dampfbereiter 218 zur Verfügung gestellt werden. Zusätzlich kann über ein steuerbares Ventil 219 Trägergas oder Reaktionsgas oder eine Mischung daraus dem Frischwasserdampf zugeführt werden. Als Reaktionsgas kann auch z.B. Verbrennungsabluft verstanden werden.

Normalerweise enthält das kohlenstoffhaltige Ausgangsmaterial, selbst bei trockenem Ausgangsmaterial wie Holz, gebundenes oder gelöstes Wasser bzw. Wasserdampf, welches im Reaktionsraum freigegeben wird. Abgesehen von etwaigen anfänglichen Ungleichgewichtszuständen bei der Umsetzung des kohlenstoffhaltigen Ausgangsmaterials zum kohlenstoffangereicherten Feststoffprodukt kann sich das kohlenstoffhaltige Ausgangsmaterial im Gleichgewichtszustand der Umsetzung selbst mit Reaktionsfluid versorgen, so dass, anders als im Stand der Technik, zur Aufrechterhaltung der Umsetzung kein Reaktionsfluid von außen zugeführt werden muss.

Vorteilhafterweise werden die Anlagenteile 216 bis 219 ebenfalls durch die mindestens eine Steuereinrichtung 150 (Fig. 1) gesteuert, so dass die Reaktionsbedingungen im Reaktor 100 konstant oder zumindest im Wesentlichen konstant bleiben oder die gewünschten Betriebsparameter im Reaktor 100 erreicht werden, beispielsweise konstante oder dynamische Temperatur- und/ oder Druckverhältnisse.

In einer weiteren Analyseeinheit 220 können nochmals Temperatur, Druck, sowie die qualitative und/oder quantitative Zusammensetzung des Reaktionsfluids mittels geeigneter Analysenmethoden überprüft werden. Optional kann auf die Anwesenheit einer solchen weiteren Analyseneinrichtung 220 zur Bestimmung der organischen Komponenten verzichtet werden, wenn eine solche Vorrichtung in Form der Analysenvorrichtung 210 bereits vorhanden ist und die Annahme zutrifft, dass sich die organischen Komponenten in dem rezirkulierten Reaktionsfluid, dem ausgeschleusten Fluid und dem neu zugeführten Reaktionsfluid gleich verteilen.

Da das Reaktionsfluid neben Wasserdampf und Trägergas auch organische Komponenten enthält, kann wie in Fig. 3 beschrieben, eine Trennung der organisch verwertbaren Komponenten von den nicht verwertbaren Komponenten sinnvoll sein, zumindest für einen Teil des Wasserdampfstroms. Dazu kann eine Trenneinrichtung 300 vorgesehen sein, die in Fig. 3 schematisch dargestellt ist.

Alternativ kann auch eine zusätzliche Kondensationsstufe analog Figur 3 die organischen Komponenten des ausgeschleusten Reaktionsfluids bei höherer Temperatur als der Kondensationstemperatur des Wasserdampfs auffangen, die dann energetisch oder stofflich verwertet werden können oder aber auch zur weiteren Kohlenstoffanreicherung des gewünschten Produkts zur Einlassöffnung 102 zurückgeführt werden.

Das über die steuerbare Fluidauskoppelvorrichtung 216 ausgeschleuste Reaktionsfluid kann neben Wasserdampf und eventuell Trägergas und/oder Reaktionsstoff auch organische Komponenten aus dem kohlenstoffhaltigen Material enthalten. Dieses Fluid kann je nach organischer Belastung entweder verworfen werden oder aber es kann durch einen Wärmetauscher 310 geleitet werden, in dem es abgekühlt und der Wasserdampf und der Großteil der organischen Komponenten kondensiert werden und anschließend in einem Behälter 320, der nach unten hin über ein steuerbares Ventil 323 entleert werden kann, aufgefangen werden.

Die leichter flüchtigen Bestandteile des ausgeschleusten Teils des Reaktionsfluids wie bspw. das evtl. verwendete Trägergas und/oder der Reaktionsstoff und bei Raumtemperatur gasförmige Produkte wie z.B. CO, CO₂, CH₄ und höhere Alkane und Alkene oder auch zyklische Verbindungen können durch eine Pumpe 324 unterstützt in einem Auffangbehälter 325, etwa einem Druckbehälter, aufgefangen und/oder verdichtet werden. Je nach Zusammensetzung bzw. Heizwert des in Behälter 325 vorhandenen Gases kann dieses als Brenngas zur Wasserdampfbereitung verwendet werden. Alternativ kann dieser Stoffstrom auch verworfen werden.

Statt einer Verwerfung der in den Behältern 320 und 325 aufgefangenen Produkte, kann auch eine stoffliche Nutzung möglich sein. Beispielsweise kann wie oben beschrieben das in Behälter 325 gesammelte Produktgas zur Wasserdampferzeugung verwendet werden. Beim Kondensat, das in Behälter 320 aufgefangen wird und organische Verbindungen enthält, können bspw. die organischen Komponenten in geeigneter Weise zugänglich gemacht, insbesondere durch Kristallisation oder auch Dekantieren der ölartigen Phase, und weiter verwendet werden.

Es können aber auch die im Wasser gelösten Komponenten weiteren bekannten Verfahren der Nutzung von Biomasseumsetzungen, z.B. Fermentationsverfahren, zugeführt werden. Durch die hier vorgeschlagenen Verwertungsmöglichkeiten können also wertvolle Nebenprodukte bei der Hydrothermolyse von kohlenstoffhaltigen Materialien zugänglich werden, wie bspw. eine feste Mischung aus aromatischen und aliphatischen Substanzen oder eine komplexe, flüssige Mischung mittel- und höheraggregierter organischer Substanzen. Diese können dann thermisch oder evtl. auch stofflich genutzt werden.

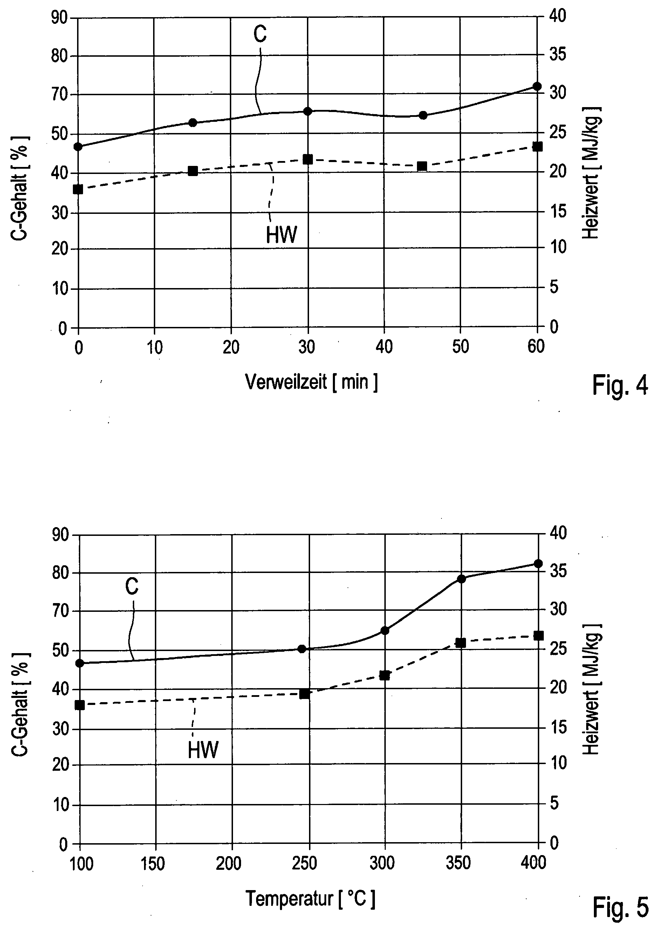

Wie oben erwähnt ist die Zusammensetzung des kohlenstoffangereicherten Feststoffprodukts von den Prozessparametern, insbesondere der Verweilzeit und der Reaktionstemperatur abhängig. Diese Abhängigkeit ist in den Figuren 4 und 5 graphisch dargestellt, wobei Fig. 4 die Abhängigkeit von der Verweilzeit und Fig. 5 die Abhängigkeit von der Reaktionstemperatur veranschaulicht. Dabei ist auf der x-Achse die Verweilzeit in Fig. 4 und die Temperatur in Fig. 5 aufgetragen, während auf der jeweils y-Achse der Kohlenstoffgehalt und der Heizwert aufgetragen sind.

Wie Fig. 4 zu entnehmen ist, steigt ab einer Verweilzeit von ca. 60 min (etwa bei einer gegebenen Temperatur von z.B. 300°C) sowohl der Kohlenstoffgehalt (Graph C) als auch der Heizwert (Graph HW) des kohlenstoffangereicherten Feststoffprodukts an. Allerdings zeigt sich auch, dass in einem Bereich von ca. 15 bis 45 min der Kohlenstoffgehalt C und auch der Heizwert HW relativ konstant bleiben und erst nahe und ab etwa 60 min ein deutlicher weiterer Anstieg stattfindet. Fig. 4 ist zudem zu entnehmen, dass sogar schon bei derart geringen Verweilzeiten, wie beispielsweise nur 30 min, in der erfindungsgemäßen Reaktoranlage 10 eine merkliche Erhöhung von Heizwert HW und Kohlenstoffgehalt C des kohlenstoffangereicherten Feststoffprodukts erzielt werden kann.

Auch bei dem in Fig. 5 dargestellten Schaubild ist zu erkennen, dass mit der erfindungsgemäßen Reaktoranlage 10 bereits bei relativ geringen Temperaturen unter 450°C eine deutliche Erhöhung von Kohlenstoffgehalt (Graph C) und Heizwert (Graph HW) gegeben ist. Dabei findet (etwa bei einer gegebenen Verweildauer von z.B. 30 min) ab ca. 350°C eine gute Karbonisierung des Feststoffes statt, die sich in Richtung 400°C noch erhöht. Ein abzuwägender Nachteil ist jedoch, dass ab einer Temperatur von ca. 350°C eine starke Kohlenstoffoxid-Bildung einsetzt, deren Kohlenstoffanteil den Kohlenstoffanteil des Feststoffprodukts wiederum verringern würde. Bleibt jedoch die Temperatur unter oder im Bereich von 350°C, ist sowohl eine gute Karbonisierung als auch eine hinreichend geringe CO₂-Bildung gegeben.

## Patentansprüche

1. Reaktoranlage (10) zur Erzeugung eines kohlenstoffangereicherten Feststoffprodukts mittels Erhöhung eines Kohlenstoffgehalts und/oder Verminderung eines Sauerstoffgehalts eines kohlenstoffhaltigen Materials, mit einer Steuereinrichtung (150) und einem Reaktor (100), der umfasst
(a) eine erste Einlassöffnung (102) zum Einbringen des kohlenstoffhaltigen Materials,
(b) mindestens eine zweite Einlassöffnung (105) zum Einbringen eines Reaktionsfluids,
(c) eine erste Auslassöffnung (109) zum Austragen des kohlenstoffangereicherten Feststoffprodukts,
(d) eine zweite Auslassöffnung (110) zum Austragen des Reaktionsfluids,
(e) eine Fördereinrichtung (104) für den Transport des kohlenstoffhaltigen Materials von erster Einlassöffnung (102) zu erster Auslassöffnung (109), und
(f) eine Temperiereinrichtung (106) wenigstens zum Einstellen oder Erhalten einer Reaktionstemperatur in dem Reaktor (100),
wobei der Reaktor (100) weiterhin mit der Steuereinrichtung (150) gekoppelt ist, die dazu ausgelegt ist, die Einlass- und/oder Auslassöffnungen (102, 105, 109, 110) und/oder die Temperiereinrichtung (106) derart anzusteuern, dass im Reaktor (100) eine Temperatur zwischen 100°C bis 450°C und ein Druck zwischen 1 bar und 5 bar herrschen, wobei Reaktionsbedingungen so gewählt sind, dass das Reaktionsfluid während der Reaktion gasförmig bleibt, wobei die Fördereinrichtung (104) ansteuerbar ist, das kohlenstoffhaltige Material kontinuierlich zuzuführen und das kohlenstoffangereicherte Feststoffprodukt kontinuierlich abzuführen, so dass das kohlenstoffhaltige Material während der Umsetzung zum kohlenstoffangereicherten Feststoffprodukt kontinuierlich durch den Reaktor (100) bewegbar ist, und wobei weiterhin eine, die zweite Einlassöffnung (105) und die zweite Auslassöffnung (110) verbindende, Rezirkulationseinrichtung (200) vorgesehen ist, mit der das Reaktionsfluid zumindest teilweise rezirkulierbar ist, um den Kohlenstoffanteil des kohlenstoffangereicherten Feststoffprodukts durch aus der Biomasse herausgelöste organische Bestandteile im rezirkulierten Reaktionsfluid weiter zu erhöhen.

2. Reaktoranlage nach Anspruch 1, wobei die Steuereinrichtung (150) dazu ausgelegt ist, die Einlass- und/oder Auslassöffnungen (102, 105, 109, 110) und/oder die Temperiereinrichtung (106) derart anzusteuern, dass im Reaktor (100) eine Temperatur unter 400°C einstellbar ist, wobei die Temperatur insbesondere so einstellbar ist, dass die Temperatur unterhalb einer Grenztemperatur einstellbar ist, oberhalb derer einer erhöhte Bildung von Kohlenstoffoxid erfolgt.

3. Reaktoranlage nach Anspruch 1 oder 2, wobei die Steuereinrichtung (150) dazu ausgelegt ist, die Fördereinrichtung (104) derart anzusteuern, dass das Material im Reaktor (100) maximal wenige Stunden verweilt, insbesondere höchstens drei Stunden, wobei die Fördereinrichtung (104) eine Förderschnecke oder ein Transportband, insbesondere angetrieben durch einen steuerbaren Motor (103), und/oder eine Gravitationsfördereinrichtung umfasst.

4. Reaktoranlage nach einem der vorhergehenden Ansprüche, wobei die zweite Einlassöffnung (105) zum Einbringen des Reaktionsfluids mehrere über einen Einlassbereich des Reaktors (100) verteilte Öffnungen aufweist.

5. Reaktoranlage nach einem der vorhergehenden Ansprüche, wobei die Temperiereinrichtung (106) als Wärmetauscher ausgebildet ist, der die Reaktionswärme des Reaktors an ein Wärmeträgermedium abgibt und/oder von einem Wärmeträgermedium aufnimmt, wobei vorteilhafterweise das Wärmeträgermedium das Reaktionsfluid ist.

6. Reaktoranlage nach einem der vorhergehenden Ansprüche, die eine stromab nach der zweiten Auslassöffnung (110) angeordnete erste Analyseeinheit (210), die eine Bestimmung des Reaktionsfluiddrucks und/oder der Reaktionsfluidtemperatur und/oder eine qualitative und/oder quantitative Bestimmung der Bestandteile des aus der zweiten Auslassöffnung (110) entfernten Reaktionsfluids, insbesondere mittels Flammenionisationsdetektion oder mittels Spektroskopie, wie beispielsweise Infrarotspektroskopie, bereitstellt;
und/oder dass stromauf vor der steuerbaren zweiten Einlassöffnung (105) eine zweite Analyseeinheit (220) vorgesehen ist, die eine Bestimmung des Reaktionsfluiddrucks und/oder der Reaktionsfluidtemperatur und/oder eine qualitative und/oder quantitative Bestimmung der Bestandteile des in die zweite Einlassöffnung (105) eintretenden Reaktionsfluids, insbesondere mittels Flammenionisationsdetektion oder mittels Spektroskopie, wie beispielsweise Infrarotspektroskopie, bereitstellt.

7. Reaktoranlage nach Anspruch 6, wobei die Steuereinrichtung (150) dazu ausgelegt ist, den Druck und/oder die Temperatur und/oder die Verweildauer und/oder das Rezirkulationsverhältnis in dem Reaktor (100) in Abhängigkeit der von der mindestens einen Analyseeinheit (210, 220) detektierten Werte anzupassen.

8. Reaktoranlage nach einem der vorhergehenden Ansprüche, wobei weiterhin eine Pumpe (214) zum Ansaugen und/oder Verdichten des über die zweite Auslassöffnung (110) aus dem Reaktor (100) entfernten Reaktionsfluids vorgesehen ist, wobei vorteilhafterweise die Pumpe (214) stromab der Analyseeinheit (210) angeordnet ist.

9. Reaktoranlage nach einem der vorhergehenden Ansprüche, wobei weiterhin ein zweiter Wärmetauscher (215) vorgesehen ist, über den die Temperatur des über die zweite Auslassöffnung (110) entfernten Reaktionsfluids einstellbar ist, wobei vorzugsweise eine Reaktionstemperatur unter 450°C einstellbar ist.

10. Reaktoranlage nach einem der vorhergehenden Ansprüche, wobei weiterhin eine Fluidauskoppelvorrichtung (216), insbesondere in Form eines Ventils, vorgesehen ist, mit der überschüssiges Reaktionsfluid aus dem Reaktor (100) auskoppelbar ist.

11. Reaktoranlage nach Anspruch 10, wobei stromab der Fluidauskoppelvorrichtung (216) eine Trennvorrichtung (300) vorgesehen ist, mit der eine Trennung von kondensierbaren Reaktionsfluidbestandteilen und gasförmigen Reaktionsfluidbestandteilen durchführbar ist.

12. Reaktoranlage nach Anspruch 11, wobei die Trennvorrichtung (300) einen dritten Wärmetauscher (310) aufweist, der das ausgekoppelte Reaktionsfluid auf etwa Raumtemperatur abkühlt, wobei vorzugsweise der Wärmetauscher (310) mit einem ersten Auffangbehälter (320) für kondensierte Bestandteile und einem zweiten Auffangbehälter (325) für gasförmige Bestandteile verbunden ist, wobei vorzugsweise weiterhin eine Pumpe (324) zur Förderung und/oder Verdichtung der gasförmigen Bestandteile des ausgekoppelten Reaktionsfluids stromab des dritten Wärmetauschers (310) vorhanden ist.

13. Reaktoranlage nach Anspruch 11 oder 12, wobei ein Auffangbehälter bei einer Temperatur oberhalb der Kondensationstemperatur des Wasserdampfs höhersiedende organische Bestandteile auffängt und zur Einlassöffnung (102) zurückführt und/oder einer stofflichen und/oder energetischen Verwertung zuführt.

14. Reaktoranlage nach einem der Ansprüche 1 bis 13, wobei weiterhin eine Fluideinkoppelvorrichtung (217), insbesondere in Form eines Ventils vorgesehen ist, mit der unbelasteter Wasserdampf und/oder Trägergas und/oder Reaktionsstoff der Rezirkulationseinrichtung (200) und/oder dem Reaktorteil (100) zugebbar ist.

15. Verfahren zur Erhöhung eines Kohlenstoffanteils in kohlenstoffhaltigen Materialien, insbesondere mit einer Reaktoranlage (10) nach einem der vorherigen Ansprüche, folgende Schritte umfassend:
(a) Einbringen des kohlenstoffhaltigen Materials in einen Reaktor (100);
(b) Beaufschlagen des Materials mit einem Reaktionsfluid, das zumindest teilweise Wasserdampf enthält;
(c) Umwandeln des Materials unter Sauerstoffabreicherung in ein kohlenstoffangereichertes Feststoffprodukt;
(d) Entfernen des kohlenstoffangereicherten Feststoffprodukts aus dem Reaktor (100); und
(e) Entfernen des Reaktionsfluids aus dem Reaktor (100),
wobei im Reaktor (100) zur Umsetzung des kohlenstoffhaltigen Materials in ein kohlenstoffangereichertes Feststoffprodukt eine Temperatur zwischen 100°C bis 450°C und ein Druck zwischen 1 bar und 5 bar herrschen, und wobei Reaktionsbedingungen so gewählt werden, dass das Reaktionsfluid während der Reaktion gasförmig bleibt, wobei das kohlenstoffhaltige Material kontinuierlich zugeführt und das kohlenstoffangereicherte Feststoffprodukt kontinuierlich abgeführt wird, so dass das kohlenstoffhaltige Material während der Umsetzung zum kohlenstoffangereicherten Feststoffprodukt kontinuierlich durch den Reaktor (100) bewegt wird, und wobei weiterhin eine Rezirkulationseinrichtung (200) eine zweite Einlassöffnung 105) des Reaktors (100) und eine zweite Auslassöffnung (110) des Reaktors (100) verbindet, mit der das Reaktionsfluid zumindest teilweise rezirkuliert wird, um den Kohlenstoffanteil des kohlenstoffangereicherten Feststoffprodukts durch aus der Biomasse herausgelöste organische Bestandteile im rezirkulierten Reaktionsfluid weiter zu erhöhen.

16. Verfahren nach Anspruch 15, wobei das Reaktionsfluid Wasserdampf ist, wobei während der Reaktion im Reaktor (100) eine Kondensation von Wasserdampf vermieden wird.

17. Verfahren nach Anspruch 15, wobei das Reaktionsfluid Wasserdampf oder ein Wasserdampfgemisch ist, wobei vorteilhafterweise das Wasserdampfgemisch ein Wasserdampf/Trägergasgemisch und/oder ein Wasserdampf/Reaktionsgasgemisch, insbesondere mit organischen Komponenten, wie beispielsweise Methan, höheren Alkanen, Alkenen, Aromaten, Derivaten, Kohlendioxid, und/oder Kohlenmonoxid, und/oder einem oder mehreren Aerosolen, wie beispielsweise Säureanhydride und/oder Leichtmetallsalz und/oder Verbrennungsabgas, als Reaktionsgas, umfasst.

## Claims

1. Reactor facility (10) for producing a carbon-enriched solid product by increasing a carbon content and/or by reducing an oxygen content of a carbon-containing material, having a control unit (150) and a reactor (100), comprising
(a) a first inlet opening (102) for inserting the carbon-containing material,
(b) at least one second inlet opening (105) for inserting a reaction fluid,
(c) a first outlet opening (109) for removing the carbon-enriched solid product,
(d) a second outlet opening (110) for removing the reaction fluid,
(e) a conveying unit (104) for transporting the carbon-containing material from the first inlet opening (102) to the first outlet opening (109), and
(f) a temperature control device (106) at least for setting or maintaining a reaction temperature in the reactor (100),
where the reactor (100) further is coupled to the control unit (150), which is designed to control the inlet and/or outlet openings (102, 105, 109, 110) and/or the temperature control device (106) such that a temperature of between 100 °C and 450 °C and a pressure of between 1 bar and 5 bar prevail in the reactor (100), where reaction conditions are selected such that the reaction fluid remains gaseous during the reaction, where the conveying unit (104) can be operated to supply the carbon-containing material continuously and to discharge the carbon-enriched solid product continuously, such that the carbon-containing material can be continuously moved through the reactor (100) during the conversion to carbon-enriched solid product, and where furthermore a recirculation device (200) connecting the second inlet opening (105) and the second outlet opening (110) is provided, using which the reaction fluid can be at least partly recirculated in order to further increase the carbon proportion of the carbon-enriched solid product by organic constituents separated out of the biomass in the recirculated reaction fluid.

2. Reactor facility according to claim 1, where the control unit (150) is designed to control the inlet and/or outlet openings (102, 105, 109, 110) and/or the temperature control device (106) such that a temperature below 400 °C can be set in the reactor (100), where the temperature can in particular be set such that the temperature can be set below a temperature limit above which an increased formation of carbon oxide results.

3. Reactor facility according to claim 1 or 2, where the control unit (150) is designed to control the conveying unit (104) such that the material is retained at most for a few hours in the reactor (100), in particular for no more than three hours, where the conveying unit (104) comprises a conveying worm or a conveying belt, in particular driven by a controllable motor (103), and/or a gravity conveying unit.

4. Reactor facility according to one of the preceding claims, where the second inlet opening (105) for inserting the reaction fluid has a plurality of openings spread over an inlet area of the reactor (100).

5. Reactor facility according to one of the preceding claims, where the temperature control device (106) is designed as a heat exchanger which transfers the reaction heat of the reactor to a heat-transfer medium and/or receives it from a heat-transfer medium, where the heat-transfer medium is advantageously the reaction fluid.

6. Reactor facility according to one of the preceding claims, comprising a first analysis unit (210) arranged downstream of the second outlet opening (110) and providing a determination of the reaction fluid pressure and/or of the reaction fluid temperature and/or a qualitative and/or quantitative determination of the constituents of the reaction fluid removed from the second outlet opening (110), in particular by means of flame ionization detection or by means of spectroscopy, for example infrared spectroscopy;
and/or that upstream of the controllable second inlet opening (105) a second analysis unit (220) is provided, which provides a determination of the reaction fluid pressure and/or of the reaction fluid temperature and/or a qualitative and/or quantitative determination of the constituents of the reaction fluid entering the second inlet opening (105), in particular by means of flame ionization detection or by means of spectroscopy, for example infrared spectroscopy.

7. Reactor facility according to claim 6, where the control unit (150) is designed to adapt the pressure and/or the temperature and/or the retention time and/or the recirculation ratio inside the reactor (100) as a function of the values detected by the least one analysis unit (210, 220).

8. Reactor facility according to one of the preceding claims, where a pump (214) is furthermore provided for intake and/or compression of the reaction fluid removed from the reactor (100) via the second outlet opening (110), said pump (214) being advantageously arranged downstream of the analysis unit (210).

9. Reactor facility according to one of the preceding claims, where a second heat exchanger (215) is furthermore provided via which the temperature of the reaction fluid removed via the second outlet opening (110) can be set, where a reaction temperature preferably below 450 °C can be set.

10. Reactor facility according to one of the preceding claims, where furthermore a fluid removal device (216), in particular in the form of a valve, is provided, using which excess reaction fluid can be removed from the reactor (100).

11. Reactor facility according to claim 10, where downstream of the fluid removal device (216) a separating device (300) is provided, using which a separation of condensable reaction fluid constituents and gaseous reaction fluid constituents can be performed.

12. Reactor facility according to claim 11, where the separating device (300) has a third heat exchanger (310) which cools the removed reaction fluid to approximately room temperature, where preferably the heat exchanger (310) is connected to a first collecting tank (320) for condensed constituents and to a second collecting tank (325) for gaseous constituents, where furthermore preferably a pump (324) for conveying and/or compressing the gaseous constituents of the removed reaction fluid is provided downstream of the third heat exchanger (310).

13. Reactor facility according to claim 11 or 12, where at a temperature above the condensation temperature of water vapour, a collecting tank collects organic constituents of higher boiling point and returns them to the inlet opening (102) and/or supplies them to a facility for recycling their materials and/or for energy recovery.

14. Reactor facility according to one of claims 1 to 13, where a fluid adding device (217), in particular in the form of a valve, is furthermore provided, using which uncontaminated water vapour and/or carrier gas and/or reaction material can be supplied to the recirculation unit (200) and/or to the reactor part (100).

15. Method for increasing a carbon content in carbon-containing materials, in particular having a reactor facility (10) according to one of the preceding claims, comprising the following steps:
(a) inserting the carbon-containing material into a reactor (100);
(b) subjecting the material to a reaction fluid that contains water vapour at least in part;
(c) converting the material with oxygen depletion into a carbon-enriched solid product;
(d) removing the carbon-enriched solid product from the reactor (100); and
(e) removing the reaction fluid from the reactor (100),
where a temperature of between 100 °C and 450 °C and a pressure of between 1 bar and 5 bar prevail in the reactor (100) for converting the carbon-containing material into a carbon-enriched solid product, and where reaction conditions are selected such that the reaction fluid remains gaseous during reaction, where the carbon-containing material is continuously supplied and the carbon-enriched solid product is continuously discharged, so that the carbon-containing material is continuously moved through the reactor (100) during conversion to the carbon-enriched solid product, and where a recirculation unit (200) furthermore connects a second inlet opening (105) of the reactor (100) and a second outlet opening (110) of the reactor (100), using which the reaction fluid is at least partly recirculated in order to further increase the carbon proportion of the carbon-enriched solid product by organic constituents separated out of the biomass in the recirculated reaction fluid.

16. Method according to claim 15, where the reaction fluid is water vapour and where condensation of water vapour is avoided during the reaction in the reactor (100).

17. Method according to claim 15, where the reaction fluid is water vapour or a water vapour mixture, where advantageously the water vapour mixture comprises a water vapour/carrier gas mixture and/or a water vapour/reaction gas mixture, in particular with organic components, for example methane, higher alkanes, alkenes, aromatic compounds, derivatives, carbon dioxide, and/or carbon monoxide, and/or one or more aerosols, for example acid anhydrides and/or light metal salt and/or combustion exhaust gas, as the reaction gas.

## Revendications

1. Installation de réacteur (10) pour la production d'un produit de matière solide enrichi en carbone à l'aide de l'augmentation d'une teneur en carbone et/ou d'une diminution d'une teneur en oxygène d'un matériau carboné, ladite installation étant munie d'un dispositif de commande (150) et d'un réacteur (100), lequel comprend
(a) un premier orifice d'entrée (102) pour charger le matériau carboné,
(b) au moins un deuxième orifice d'entrée (105) pour charger un fluide réactionnel,
(c) un premier orifice de sortie (109) pour décharger le produit de matière solide enrichi en carbone,
(d) un deuxième orifice de sortie (110) pour décharger le fluide réactionnel,
(e) un convoyeur (104) pour le transport du matériau carboné entre le premier orifice d'entrée (102) et le premier orifice de sortie (109), et
(f) un dispositif de régulation de la température (106) au moins pour régler ou maintenir une température réactionnelle dans le réacteur (100),
le réacteur (100) étant en outre couplé avec le dispositif de commande (150) conçu pour piloter les orifices d'entrée et/ou de sortie (102, 105, 109, 110) et/ou le dispositif de régulation de la température (106) de manière telle que dans le réacteur (100) règnent une température comprise entre 100 °C et 450 °C et une pression comprise entre 1 bar et 5 bars, sachant que les conditions réactionnelles sont choisies pour que le fluide réactionnel reste gazeux pendant la réaction, que le convoyeur (104) peut être commandé pour amener en continu le matériau carboné et évacuer en continu le produit de matière solide enrichi en carbone, de sorte que lors de la transformation en produit de matière solide enrichi en carbone, le matériau carboné peut être transporté en continu à travers le réacteur (100), et sachant qu'est en outre prévu un système de recirculation (200) qui relie le deuxième orifice d'entrée (105) et le deuxième orifice de sortie (110), et avec lequel le fluide réactionnel peut être au moins partiellement recirculé, afin d'augmenter encore davantage la fraction carbonée du produit de matière solide enrichi en carbone grâce aux composants organiques extraits de la biomasse se trouvant dans le fluide réactionnel recirculé.

2. Installation de réacteur selon la revendication 1, dans laquelle le dispositif de commande (150) est conçu pour piloter les orifices d'entrée et/ou de sortie (102, 105, 109, 110) et/ou le dispositif de régulation de la température (106) de sorte qu'une température inférieure à 400 °C peut être réglée dans le réacteur (100), sachant que la température est en particulier réglable de manière telle qu'elle peut être réglée au-dessous d'une température limite au-dessus de laquelle se produit une formation accrue d'oxyde de carbone.

3. Installation de réacteur selon la revendication 1 ou 2, dans laquelle le dispositif de commande (150) est conçu pour piloter le convoyeur (104) de sorte que le matériau séjourne au maximum un faible nombre d'heures dans le réacteur (100), en particulier trois heures au maximum, sachant que le convoyeur (104) comprend une vis sans fin ou une bande transporteuse, en particulier entraînée par un moteur (103) réglable, et/ou un transporteur par gravité.

4. Installation de réacteur selon l'une des revendications précédentes, dans laquelle le deuxième orifice d'entrée (105) pour charger le fluide réactionnel présente plusieurs ouvertures réparties sur une zone d'entrée du réacteur (100).

5. Installation de réacteur selon l'une des revendications précédentes, dans laquelle le dispositif de régulation de la température (106) est conçu sous la forme d'un échangeur thermique, lequel cède à un fluide caloporteur la chaleur de réaction du réacteur et/ou l'absorbe depuis un fluide caloporteur, sachant que de manière avantageuse, le fluide caloporteur est le fluide réactionnel.

6. Installation de réacteur selon l'une des revendications précédentes, comprenant une première unité d'analyse (210) qui est disposée en aval du deuxième orifice de sortie (110) et fournit une analyse de la pression du fluide réactionnel et/ou de la température du fluide réactionnel et/ou une analyse qualitative et/ou quantitative des composants du fluide réactionnel sortant du deuxième orifice de sortie (110), lesdites analyses étant en particulier réalisées par une détection d'ionisation de flamme ou par spectroscopie, par exemple de la spectroscopie à infrarouge ;
et/ou sachant qu'en amont du deuxième orifice d'entrée (105) réglable est prévue une deuxième unité d'analyse (220) qui fournit une analyse de la pression du fluide réactionnel et/ou de la température du fluide réactionnel et/ou une analyse qualitative et/ou quantitative des composants du fluide réactionnel entrant dans le deuxième orifice d'entrée (105), lesdites analyses étant en particulier réalisées par une détection d'ionisation de flamme ou par spectroscopie, par exemple de la spectroscopie à infrarouge.

7. Installation de réacteur selon la revendication 6, dans laquelle le dispositif de commande (150) est conçu pour ajuster en fonction des valeurs détectées par l'au moins une unité d'analyse (210, 220) la pression et/ou la température et/ou la durée de séjour et/ou le taux de recirculation dans le réacteur (100).

8. Installation de réacteur selon l'une des revendications précédentes, dans laquelle est en outre prévue une pompe (214) pour aspirer et/ou comprimer le fluide réactionnel sorti du réacteur (100) par le deuxième orifice de sortie (110), sachant que de manière avantageuse, ladite pompe (214) est disposée en aval de l'unité d'analyse (210).

9. Installation de réacteur selon l'une des revendications précédentes, dans laquelle est en outre prévu un deuxième échangeur thermique (215), par l'intermédiaire duquel peut être réglée la température du fluide réactionnel sortant par le deuxième orifice de sortie (110), cette température réactionnelle étant de préférence réglable à une valeur inférieure à 450 °C.

10. Installation de réacteur selon l'une des revendications précédentes, dans laquelle est en outre prévu un dispositif de prélèvement de fluide (216), en particulier sous la forme d'une vanne, dispositif avec lequel le fluide réactionnel en excès peut être prélevé du réacteur (100).

11. Installation de réacteur selon la revendication 10, dans laquelle est prévu en aval du dispositif de prélèvement de fluide (216) un dispositif séparateur (300) avec lequel peut être effectuée une séparation entre composants condensables du fluide réactionnel et composants gazeux du fluide réactionnel.

12. Installation de réacteur selon la revendication 11, dans laquelle le dispositif séparateur (300) présente un troisième échangeur thermique (310) qui refroidit approximativement à la température ambiante le fluide réactionnel prélevé, sachant que de préférence l'échangeur thermique (310) est relié à un premier collecteur (320) pour composants condensés et à un deuxième collecteur (325) pour composants gazeux, et que de préférence est en outre prévue en aval du troisième échangeur thermique (310) une pompe (324) pour refouler et/ou comprimer les composants gazeux du fluide réactionnel prélevé.

13. Installation de réacteur selon la revendication 11 ou 12, dans laquelle sous une température supérieure à la température de condensation de la vapeur d'eau, un collecteur recueille des composants organiques à point d'ébullition plus élevé et les ramène à l'orifice d'entrée (102) et/ou les dirige vers une installation de valorisation matérielle et/ou énergétique.

14. Installation de réacteur selon l'une des revendications 1 à 13, dans laquelle est en outre prévu un dispositif d'alimentation en fluide (217), en particulier sous la forme d'une vanne, dispositif avec lequel de la vapeur d'eau non chargée et/ou un gaz porteur et/ou une substance réactionnelle peut/peuvent être ajouté(e)(s) au système de recirculation (200) et/ou à la partie de réacteur (100).

15. Procédé destiné à augmenter une fraction carbonée dans des matériaux carbonés, en particulier avec une installation de réacteur (10) selon l'une des revendications précédentes, ledit procédé comprenant les étapes suivantes :
(a) chargement du matériau carboné dans un réacteur (100) ;
(b) mise en contact du matériau avec un fluide réactionnel contenant au moins partiellement de la vapeur d'eau ;
(c) transformation du matériau en produit de matière solide enrichi en carbone sous appauvrissement en oxygène ;
(d) déchargement du produit de matière solide enrichi en carbone hors du réacteur (100) ; et
(e) déchargement du fluide réactionnel hors du réacteur (100),
sachant que pour transformer le matériau carboné en produit de matière solide enrichi en carbone règnent dans le réacteur (100) une température comprise entre 100 °C et 450 °C et une pression comprise entre 1 bar et 5 bars, que les conditions réactionnelles sont choisies pour que le fluide réactionnel reste gazeux pendant la réaction, que le matériau carboné est amené en continu et le produit de matière solide enrichi en carbone est évacué en continu, de sorte que lors de la transformation en produit de matière solide enrichi en carbone, le matériau carboné est transporté en continu à travers le réacteur (100), et sachant qu'est en outre prévu un système de recirculation (200) qui relie un deuxième orifice d'entrée (105) du réacteur (100) et un deuxième orifice de sortie (110) du réacteur (100), et avec lequel le fluide réactionnel est recirculé au moins partiellement, afin d'augmenter encore davantage la fraction carbonée du produit de matière solide enrichi en carbone grâce aux composants organiques extraits de la biomasse se trouvant dans le fluide réactionnel recirculé.

16. Procédé selon la revendication 15, dans lequel le fluide réactionnel est de la vapeur d'eau, sachant qu'une condensation de la vapeur d'eau est évitée pendant la réaction dans le réacteur (100).

17. Procédé selon la revendication 15, dans lequel le fluide réactionnel est de la vapeur d'eau ou un mélange à base de vapeur d'eau, sachant que de manière avantageuse, le mélange à base de vapeur d'eau est un mélange vapeur d'eau/gaz porteur et/ou un mélange vapeur d'eau/gaz réactionnel, en particulier avec des composants organiques, tels que par exemple méthane, alcanes supérieurs, alcènes, composés aromatiques, dérivés, dioxyde de carbone, et/ou monoxyde de carbone, et/ou comprend en tant que gaz réactionnel un ou plusieurs aérosol(s), tel(s) que par exemple anhydride d'acide et/ou sel d'un métal léger et/ou gaz d'échappement de combustion.
